# FASCICULE DE BREVET EUROPEEN

(11) **EP 3 635 064 B1**
(45) Date de publication et mention de la délivrance du brevet: **09.11.2022**
(21) Numéro de dépôt: 18737946.6
(22) Date de dépôt: 10.06.2018
(51) Int. Cl.: C09D 163/00, C09D 175/04

(54) **PROCÉDÉ DE PRÉPARATION, DE CONSERVATION ET D'UTILISATION DE PEINTURES BI-COMPOSANTS**
VERFAHREN ZUR HERSTELLUNG, LAGERUNG UND VERWENDUNG VON ZWEIKOMPONENTENLACKEN
METHOD FOR PREPARING, STORING AND USING TWO-COMPONENT PAINTS

(30) Priorité: 10.06.2017 FR 1770609
(43) Date de publication de la demande: 15.04.2020
(73) Titulaire: Sablage et Peinture Liccardi Serge, 54910 Valleroy (FR)
(72) Inventeur: LICCARDI, Serge, 54150 Briey (FR)
(86) Numéro de dépôt international: PCT/FR2018/000167
(87) Numéro de publication internationale: WO 2018/224741

(56) Documents cités:
- SMITH ET AL: "Rapid cure technology. Recent advances in low temperature and rapid recoat technology", PROCEEDINGS - CORROSION & PREVENTION 95 PERTH, AUSTRALIA, NOV. 12-16, 1995 (1995), PAPER 47, 7 PP. PUBLISHER: AUSTRALASIAN CORROSION ASSOCIATION, CLAYTON, AUSTRALIA, AUSTRALASIAN CORROSION ASSOCIATION, CLAYTON, AU, vol. Paper 47, 12 novembre 1995 (1995-11-12), pages 1-7, XP009502960,
- SPC: SP-2831 low temperature cure coating , 17 octobre 2006 (2006-10-17), XP002777558, Extrait de l'Internet: URL:http://www.spc-net.com/pdfs/Product%20 Data%20Sheet%20SP-2831%20Low%20Temperature %20Cure.pdf [extrait le 2018-01-22]
- Polycure: "Applying Polyurethane Coatings in Cold Weather", , 12 novembre 2014 (2014-11-12), XP002777559, Extrait de l'Internet: URL:http://polycure.com.au/wp-content/uplo ads/2014/12/04-Applying-Polyurethane-Coati ngs-in-Cold-Weather1.pdf [extrait le 2016-01-22]
- Warren Brand: "The Do's and Don'ts of Applying Coatings in Cold Weather", , 24 novembre 2014 (2014-11-24), XP002777560, Extrait de l'Internet: URL:http://chicagocorrosiongroup.com/coati ng-consultants-blog/coating-consulting/the -dos-and-donts-of-applying-coatings-in-col d-weather/ [extrait le 2018-01-22]

## Description

La présente invention concerne un procédé pour préparer et conserver des peintures bi-composants en vue de son utilisation par un peintre industriel ou par un artisan. Quelques définitions sont tout d'abord rappelées dans le contexte de cette demande de brevet : Une peinture bi-composants est une peinture comportant essentiellement une part A et une part B, chacune généralement sous forme liquide. La part A est couramment appelée « liant » ou « base » et la part B « durcisseur ». Mélangées ensemble ces parts A et B réagissent chimiquement (réticulation). Dans le cas d'une peinture dite époxy, la part A est une résine époxyde qui durcit en présence de la part B. Dans le cas d'une peinture polyuréthane la part A est une base polyuréthane.

Le peintre incorpore souvent au mélange (part A + part B) d'autres composants par exemple des diluants ou des additifs (colorants,....).

Les peintures, laques polyuréthanes bi-composants sont largement utilisées dans l'industrie, le bâtiment, la construction automobile, la protection des métaux ou du bois. Le peintre prépare d'abord le support à peindre et applique, si nécessaire, avant de peindre un primaire d'adhérence pour renforcer la tenue. Il prépare la peinture dans un récipient en mélangeant les part A et part B en y intégrant le cas échéant du diluant ou d'autres additifs. Il applique la peinture à l'aide d'une pompe par exemple de type n'utilisant pas d'air, couramment appelée « airless », dont la sortie est reliée à un pistolet que le peintre déplace à la main devant l'objet à peindre. Le déplacement de ce pistolet ou de la buse peut être robotisée. Ces peintures bi-composants, notamment polyuréthane offrent d'excellentes qualité de brillance, de dureté et d'aspect.

Toutefois, le temps d'application est limité. La réaction de durcissement est irréversible mais n'est pas instantanée, ce qui laisse le temps au peintre d'appliquer le mélange sur la surface à enduire. Ce temps est limité, entre 1 heure et 8 heures, en fonction notamment de la température ambiante. Généralement, les recommandations des fabricants de peinture sont de peindre à une température ambiante comprise entre +7° C et +35° C (degrés Celsius) pendant une durée prédéterminée préconisée par le fabricant. Après cette durée, la viscosité de la peinture n'est plus bonne. Le mélange non utilisé doit être jeté ce qui génère des déchets chimiques dont le recyclage est contraignant et coûteux, qui génère une perte économique pour l'entreprise de peinture. Pour remédier à cet inconvénient le peintre doit anticiper son travail et ne pas préparer une trop grande quantité de peinture (part A + part B). Cette gestion est néanmoins difficile dans les ateliers artisanaux de peinture, et sur les chantiers où les travaux de peinture sont variés. La production de déchets est inévitable. Il n'est pas rare que dans un atelier de peinture bi-composants, près de 10 % de la peinture soit jetée.

Une solution consiste à augmenter le temps d'utilisation du mélange (part A + part B) en peignant à une température proche de la limite inférieure de l'intervalle de températures préconisé par le fabricant, généralement compris, selon la norme ACQPA, entre + 7°C et +35°C pour une peinture bi-composants. Le temps d'utilisation selon la température ambiante est notée sur chaque notice technique. Passés ces délais, la peinture bi-composants non utilisée est jetée.

Une solution a été trouvée pour les colles bi-composants de type époxy. La température du mélange (résine époxyde + durcisseur) est abaissée légèrement en dessous de 0°C afin d'augmenter le temps d'utilisation. La colle est ensuite appliquée à température ambiante au-dessus de 0°C pour permettre le durcissement du mélange et le collage des pièces. Les brevets US20110014367 et GB1056899 (BOSTIK) décrivent chacun une solution de ce type. Le brevet US201114367 décrit une installation de collage dans laquelle le mélange (résine époxyde + durcisseur) est placé dans une seringue refroidie destinée à coller de petites pièces. Le brevet GB1056899 décrit une solution pour conserver par le froid une bande adhésive dont la matière collante est une colle époxy bi-composants.

Cependant, les résultats attendus pour les colles et les peintures ne sont pas les mêmes. Les objets peints avec une peinture bi-composants ne doivent pas présenter de défauts visuels (aspect, brillance,...) sans affecter les qualités mécaniques (dureté, adhérence...) ni d'autres qualités comme l'anticorrosion. C'est pourquoi les fabricants de peintures préconisent dans leurs notices techniques, d'une part d'effectuer les mélanges (part A + part B) à température comprise généralement entre +7° C et + 35° C selon la norme ACQPA, et d'autre part d'utiliser ce mélange dans des délais compris entre 1 heure et 8 heures. Ces mêmes fabricants préconisent également des températures de stockage des composants conditionnés séparément en pots, ni trop froides, ni trop chaudes pour des raisons de qualité et de sécurité.

La publication technique australienne de novembre 1995 ayant pour titre « rapid cure technology. Recent advances in low temprature and rapid recoat technology » et dont les auteurs sont SMITH et AL, décrit une peinture bi-composants conçue spécialement pour durcir à des températures allant jusqu'à moins 10 ° C (- 10° C). Ce document australien mentionne que le résultat est obtenu grâce à un agent durcisseur (bases Mannich) réagissant avec un mélange approprié de résines epoxy. Cette peinture bi-composants est destinée à être utilisée notamment dans les chantiers navals en Corée où le climat est froid.

Le but de l'invention est de proposer un procédé qui permet d'utiliser une large gamme de peintures bi-composants (part A + part B) pendant une durée sensiblement plus longue que dans les procédés actuels et de réduire ainsi la production de déchets de peinture dans les ateliers de peinture, et sur les chantiers.

### Description de l'invention

Le procédé de préparation et de conservation de peintures bi-composants comprenant une part A (liant ou base) et une part B (durcisseur) se caractérise par les étapes suivantes :
- la part A et la part B sont mélangées,
- le mélange est refroidi et conservé à une température comprise entre moins 10°C et moins 25°C (entre -10°C et -25°C) , de préférence entre moins 15°C et moins 25°C (entre -15°C et -25°C).

Selon un perfectionnement de l'invention, le mélange est conservé à l'abri de l'air dans un ou plusieurs récipients ou pots hermétiques, entreposés dans une enceinte réfrigérée par exemple un congélateur. De façon générale, les récipients sont des pots classiques pourvus de couvercles. Le couvercle doit être hermétique et le pot est de préférence rempli complétement pour éviter que le mélange (part A + part B) ne soit en contact avec un volume d'air trop important.

Ainsi, le mélange (liant + durcisseur) est utilisable pour des travaux de peinture, plusieurs jours après avoir été placé dans l'enceinte réfrigérée.

Il est préférable de conserver, également au froid, les composants séparément dans leurs récipients respectifs avant de les mélanger. La température sera également comprise entre moins 10°C et moins 25°C, de préférence entre moins 15°C et moins 25°C. De cette façon, le mélange (liant + durcisseur) est utilisable pour des travaux de peinture, plusieurs jours après avoir été placé dans l'enceinte réfrigérée.

Le mélange (part A + part B) pourra être dilué de façon connue avec un diluant préconisé par le fabricant de la peinture bi-composants. Ces peintures bi-composants sont généralement à base de polyuréthane ou de résines epoxy.

Selon un autre perfectionnement de l'invention, il est utilisé une deuxième enceinte réfrigérée de taille réduite et facilement déplaçable placée à proximité des travaux de peinture.

Pour exécuter des travaux de peinture, un pot ou un nombre restreint de pots de peinture est sorti de la première enceinte, le pot est ouvert puis placé dans la deuxième enceinte réfrigérée ouverte dans sa partie supérieure. La canne ou tuyau d'admission de la pompe de peinture puise dans le pot ouvert. Ainsi la chaîne du froid n'est pas interrompue. La peinture non utilisée peut être alors replacé dans un pot de peinture refermé hermétiquement puis remis dans la première enceinte réfrigérée pour un usage le lendemain ou quelques jours plus tard.

L'invention concerne également un procédé d'utilisation d'une peinture bi-composants préparée et conservée au froid selon le procédé décrit ci-dessus. Le procédé d'utilisation se caractérise par les étapes suivantes :
- le récipient contenant le mélange (part A + part B + éventuellement le diluant) est sorti de la première enceinte réfrigérée,
- le récipient est ouvert, et le mélange est malaxé,
- le récipient est placé dans une deuxième enceinte réfrigérée plus petite que la première enceinte, à proximité de la pompe à peinture,
- l'extrémité du tuyau d'admission d'une pompe à peinture est introduit dans le récipient près du fond du récipient,
- le peintre réalise les travaux de peinture à l'aide d'un pistolet raccordé à la pompe de peinture dans un espace où la température ambiante est celle préconisée par le fabricant de peinture, en général comprise entre + 7 ° C et + 35° C, et plus 3 ° C (+ 3 ° C) au dessus du point de rosée.

Selon une variante privilégiée du procédé,
- les récipients contenant les composants part A, part B, éventuellement le diluant, sont sortis de la première enceinte réfrigérée,
- la part A est mélangée, avec la part B et éventuellement le diluant, dans un récipient,
- le récipient contenant le mélange (part A + part B + éventuellement un diluant) est placé dans une deuxième enceinte réfrigérée plus petite que la première enceinte, à proximité de la pompe à peinture,
- l'extrémité du tuyau d'admission de la pompe à peinture est introduit dans le récipient près du fond du récipient,
- le peintre réalise les travaux de peinture à l'aide d'un pistolet raccordé à la pompe de peinture.».

Le peintre applique la peinture au pistolet relié à la pompe de préférence « airless », de façon connue comme il le ferait avec une peinture non réfrigérée. En général les pompes « airless » ont une puissance suffisante pour pomper le mélange froid même après quelques jours de stockage du mélange (part A + part B) dans la première enceinte. Le travail de pompage réchauffe avantageusement le mélange froid et amène la peinture au pistolet à une température suffisante pour réaliser des travaux de peinture de qualité. Cependant un réchauffeur en amont de la pompe pour réchauffer le mélange froid peut se révéler utile, notamment si la température ambiante est inférieure à +10°C.

La deuxième enceinte réfrigérée, à proximité de la pompe à peinture permet de garder le mélange au froid dans son pot ouvert pendant les travaux de peinture. Cette deuxième enceinte est plus petite que la première enceinte et peut être déplacée aisément. Si le mélange n'est pas complétement utilisé, le pot est refermé et remis dans la première enceinte réfrigérée. Le mélange est ainsi encore réutilisable pendant plusieurs jours.

Le procédé selon l'invention est utilisable avec toutes les peintures bi-composants notamment les peintures et laques polyuréthanes (base + durcisseur), et les peintures dites époxy (résine époxyde + durcisseur).

Le procédé selon l'invention va à l'encontre des préjugés des professionnels de la peinture aussi bien des fabricants que des utilisateurs.

Le procédé a été testé avec succès :

### Description détaillée.

### Exemple 1 :

La peinture utilisée est une peinture polyuréthane bi-composants (marque Cromadex finition 600), qui peut être diluée si nécessaire avec un diluant connu préconisé par le fabricant de peinture.

Les 2 composants (part A, part B) contenus dans des pots séparés sont mis au congélateur à une température d'environ moins 23°C (-23°C). Après plusieurs jours selon les besoins du peintre, les pots sont sortis du congélateur. La part A, la part B et éventuellement une part de diluant sont mélangées à l'aide d'un malaxeur dans un pot. Ce pot est ouvert et mis dans un petit congélateur non fermé (paroi supérieure horizontale entrouverte) à proximité de la pompe à peinture. La canne ou tuyau d'admission de la pompe airless puise au fond du récipient. La peinture est appliquée sur la pièce à peindre de façon classique avec le pistolet raccordé à la pompe airless. La peinture froide non utilisée est remise dans le premier congélateur après avoir refermé hermétiquement le pot avec son couvercle. Ce pot est ressorti du congélateur 25 jours plus tard, le pot est ouvert, le mélange est malaxé avec un malaxeur, puis utilisé pour de nouveaux travaux de peinture.

### Exemple 2 :

Cet exemple illustre une façon d'utiliser au mieux le procédé de l'invention en vue de réduire la production de déchets en congelant une quantité raisonnable de peinture.

La peinture utilisée est une peinture polyuréthane bi-composants (marque Cromadex finition 600), qui peut être diluée si nécessaire avec un diluant connu préconisé par le fabricant de peinture.

On estime que pour peindre une pièce métallique, par exemple un pylône, on a besoin d'à peu près 50 kg de peinture. On a préalablement mis dans le premier congélateur les composants (base, durcisseur, et éventuellement le diluant).

Le jour des travaux de peinture, on prépare 40 kg de mélange à température ambiante avec les composants entreposés également à température ambiante (entre +7°C et +35°C). Le peintre applique les 40 kg de ce mélange sur la pièce à peindre.

Ensuite pour terminer le travail, on sort du premier congélateur les pots contenant chacun un composants (liant, durcisseur et éventuellement le diluant) et on prépare à peu près 15 kg de mélange (part A + part B + éventuellement un part de diluant). Ce mélange sera mis dans un pot ouvert placé dans le deuxième congélateur, le peintre procédera ensuite comme dans l'exemple 1.

Le mélange froid non utilisé est mis dans un pot plus petit fermé, puis stocké dans le premier congélateur. Ce mélange froid est réutilisable plusieurs jours après (approximativement 30 jours), pour terminer d'autres travaux de peintures.

Le matériel utilisé lors des tests de l'invention est une pompe « airless » de marque Graco.

Le procédé selon l'invention a été testé avec des peintures bi-composants (classiques) pour lesquelles les préconisations et les notices techniques des fabricants excluent expressément des températures inférieures à zéro degré celsius. Il permet d'atteindre sinon le zéro déchet au moins de s'en rapprocher.

## Revendications

1. Procédé de préparation et de conservation de peintures bi-composants comprenant essentiellement une part A (base ou liant) et une part B (durcisseur) **caractérisé par** les étapes suivantes :
• la part A et la part B sont mélangées,
• le mélange est conservé à une température comprise entre moins 10° C et moins 25°C (entre - 10°C et - 25°C).

2. Procédé de préparation et de conservation de peintures bi-composants selon la revendication 1, caractérisé en que le mélange comprend la part A, la part B, un diluant et différents additifs par exemple un colorant.

3. Procédé de préparation et de conservation de peintures bi-composants selon la revendication 1 ou 2, **caractérisé en ce que** le mélange (part A + part B + éventuellement le diluant) est conservé à une température comprise entre moins 15°C et moins 25°C (entre -15°C et - 25°C).

4. Procédé de préparation et de conservation de peintures bi-composants selon la revendication 1 ou 2 ou 3 **caractérisé en ce qu'**avant d'être mélangées, la part A, la part B, et éventuellement le diluant sont à une température comprise entre moins 10°C et moins 25°C (entre - 10°C et -25°C), de préférence entre moins 15°C et moins 25°C (entre -15°C et -25°C).

5. Procédé de préparation et de conservation de peintures bi-composants selon l'une quelconque des revendications 1 à 4 **caractérisé en ce que** la peinture est à base de polyuréthane ou de résines epoxy.

6. Procédé de préparation et de conservation de peintures bi-composants selon l'une quelconque des revendications 1 à 5 **caractérisé en ce que** le mélange, la part A, la part B et éventuellement le diluant sont conservés dans des récipients hermétiques entreposés dans une première enceinte réfrigérée.

7. Procédé d'utilisation d'une peinture bi-composants préparée et conservée par le procédé selon la revendication 6, **caractérisé par** les étapes suivantes :
• le récipient contenant le mélange froid (part A + part B + éventuellement le diluant) est sorti de la première enceinte,
• le récipient est ouvert et le mélange est malaxé,
• le récipient ouvert est placé dans une deuxième enceinte réfrigérée plus petite que la première enceinte, à proximité de la pompe à peinture,
• l'extrémité du tuyau d'admission de la pompe à peinture est introduit dans le récipient,
• le peintre réalise les travaux de peinture à l'aide d'un pistolet raccordé à la pompe de peinture dans un espace où la température ambiante est celle préconisée par le fabricant de peinture, en général comprise entre + 7 ° C et + 35° C, et plus 3 ° C (+ 3 ° C) au-dessus du point de rosée.

8. Procédé d'utilisation d'une peinture bi-composants préparée et conservée par le procédé selon la revendication 6, **caractérisé par** les étapes suivantes :
• Les récipients contenant les composants part A, part B, éventuellement le diluant, sont sortis de la première enceinte réfrigérée,
• la part A est mélangée avec la part B et éventuellement le diluant, dans un récipient,
• le récipient contenant le mélange (part A + part B + éventuellement un diluant) est placé dans une deuxième enceinte réfrigérée plus petite que la première enceinte, à proximité de la pompe à peinture,
• l'extrémité du tuyau d'admission de la pompe à peinture est introduit dans le récipient,
• le peintre réalise les travaux de peinture à l'aide d'un pistolet raccordé à la pompe de peinture.».

9. Procédé d'utilisation d'une peinture bi-composants selon la revendication 7 ou 8, **caractérisé en ce que** la pompe à peinture est du type « airless ».

10. Procédé d'utilisation d'une peinture bi-composants selon la revendication 7 ou 8 ou 9 **caractérisé en ce que** le mélange froid est réchauffé dans un réchauffeur en amont de la pompe de peinture.

## Patentansprüche

1. Verfahren zur Herstellung und lagerung von Zweikomponentenlacken im wesentlichen bestehend aus einem Teil A (Basis oder Bindemittel) und einem Teil B (Härter), **gekennzeichnet durch** folgende Schritte:
• Teil A und Teil B gemischt werden,
• die Mischung bei einer Temperatur zwischen minus 10°C und minus 25°C (zwischen -10°C und - 25°C) gelagert wird.

2. Verfahren zur Herstellung und lagerung von Zweikomponentenlacken nach Anspruch 1, **dadurch gekennzeichnet, dass** die Mischung Teil A, Teil B, ein Verdünnungsmittel und verschiedene Zusatzstoffe, beispielsweise ein Farbmittel, umfasst.

3. Verfahren zur Herstellung und lagerung von Zweikomponentenlacken nach Anspruch 1 oder 2, **dadurch gekennzeichnet, dass** die Mischung (Teil A + Teil B + gegebenenfalls Verdünnung) bei einer Temperatur zwischen minus 15°C und minus 25°C konserviert wird. C (zwischen -15 °C und -25 °C).

4. Verfahren zur Herstellung und lagerung von Zweikomponentenlacken nach Anspruch 1 oder 2 oder 3, **dadurch gekennzeichnet, dass** Teil A, Teil B und gegebenenfalls das Verdünnungsmittel vor dem Mischen eine Temperatur zwischen minus 10°C und minus 25° aufweisen C (zwischen -10°C und - 25°C), vorzugsweise zwischen minus 15°C und minus 25°C (zwischen -15°C und -25°C).

5. Verfahren zur Herstellung und lagerung von Zweikomponentenlacken nach einem der Ansprüche 1 bis 4, **dadurch gekennzeichnet, daß** der Lack auf Basis von Polyurethan oder Epoxidharzen hergestellt wird.

6. Verfahren zur Herstellung und lagerung von Zweikomponentenfarben nach einem der Ansprüche 1 bis 5, **dadurch gekennzeichnet, dass** die Mischung, Teil A, Teil B und gegebenenfalls das Verdünnungsmittel in hermetischen Behältern aufbewahrt werden, die in einem ersten gekühlten Raum gelagert werden.

7. Verfahren zur Verwendung einer nach dem Verfahren nach Anspruch 6 hergestellten und gelagerten Zweikomponentenfarbe, **gekennzeichnet durch** die folgenden Schritte:
• der Behälter mit der kalten Mischung (Teil A + Teil B + eventuell das Verdünnungsmittel) aus der ersten Kammer entnommen wird,
• der Behälter wird geöffnet und die Mischung geknetet,
• der offene Behälter in einen zweiten Kühlraum gestellt wird, der kleiner als der erste ist, in der Nähe der Farbpumpe,
• das Ende des Zulaufschlauchs der Farbpumpe in den Behälter eingeführt wird,
• der Lackierer die Lackierarbeiten mit einer an die Farbpumpe angeschlossenen Spritzpistole in einem Raum ausführt, in dem die Umgebungstemperatur der vom Farbhersteller empfohlenen entspricht, im Allgemeinen zwischen + 7° C und + 35° C plus 3° C ( +3°C) über dem Taupunkt.

8. Verfahren zur Verwendung einer nach dem Verfahren nach Anspruch 6, hergestellten und gelagerten Zweikomponentenfarbe, **gekennzeichnet durch** die folgenden Schritte:
• die Behälter mit den Komponenten Teil A, Teil B, + eventuell das Verdünnungsmittel, werden aus der ersten Kühlkammer entnommen,
• Teil A wird mit Teil B und eventuell dem Verdünnungsmittel in einem Behälter gemischt,
• der Behälter mit der Mischung (Teil A + Teil B + evtl. Verdünner) in einen zweiten Kühlraum gestellt wird, der kleiner ist als der erste, in der Nähe der Farbpumpe,
• das Ende des Zulaufschlauchs der Farbpumpe in den Behälter eingeführt wird,
• der Maler führt die Lackierarbeiten mit einer an die Farbpumpe angeschlossenen Spritzpistole durch."

9. Verfahren zur Verwendung eines Zweikomponentenlacks nach Anspruch 7 oder 8, **dadurch gekennzeichnet, dass** die Farbpumpe vom "airless"-Typ ist.

10. Verfahren zur Verwendung eines Zweikomponentenlacks nach Anspruch 7 oder 8 oder 9, **dadurch gekennzeichnet, dass** das kalte Gemisch in einer der Farbpumpe vorgeschalteten Heizung erhitzt wird.

## Claims

1. Method for preparing and storing two-component paints essentially comprising a part A (base or binder) and a part B (hardener) **characterized by** the following steps:
• part A and part B are mixed,
• the mixture is stored at a temperature between minus 10°C and minus 25°C (between - 10°C and - 25°C).

2. Method for preparing and storing two-component paints according to claim 1, whererin the mixture comprises part A, part B, a diluent and various additives, for example a colorant.

3. Method for preparing and storing two-component paints according to claim 1 or 2, wherein the mixture (part A + part B + optionally the thinner) is preserved at a temperature between minus 15°C and minus 25°C. C (between -15°C and - 25°C).

4. Method for preparing and storing two-component paints according to claim 1 or 2 or 3, wherein before being mixed, part A, part B, and optionally the diluent are at a temperature between minus 10 °C and minus 25°C (between -10°C and -25°C), preferably between minus 15°C and minus 25°C (between -15°C and -25°C).

5. Method for preparing and storing two-component paints according to any one of claims 1 to 4, wherein the paint is based on polyurethane or epoxy resins.

6. Method for preparing and storing two-component paints according to any one of claims 1 to 5, **characterized in that** the mixture, part A, part B and optionally the diluent are kept in hermetic containers stored in a first enclosure refrigerated.

7. Method of using a two-component paint prepared and stored according to the method of claim 6, **characterized by** the following steps:
• the container containing the cold mixture (part A + part B + possibly the diluent) is taken out of the first chamber,
• the container is opened and the mixture is kneaded,
• the open container is placed in a second refrigerated enclosure smaller than the first enclosure, near the paint pump,
• the end of the paint pump inlet pipe is inserted into the container,
• the painter carries out the painting work using a spray gun connected to the paint pump in a space where the ambient temperature is that recommended by the paint manufacturer, generally between + 7° C and + 35° C, and plus 3°C (+3°C) above the dew point.

8. Method of using a two-component paint prepared and stored according to the method of claim 6, **characterized by** the following steps:
• the containers containing the components part A, part B, possibly the diluent, are taken out of the first refrigerated chamber,
• part A is mixed with part B and possibly the diluent, in a container,
• the container containing the mixture (part A + part B + possibly a thinner) is placed in a second refrigerated enclosure smaller than the first enclosure, near the paint pump,
• the end of the paint pump inlet pipe is inserted into the container,
• the painter carries out the painting work using a spray gun connected to the paint pump.".

9. Method of using a two-component paint according to claim 7 or 8, wherein the paint pump is of the "airless" type.

10. Method of using a two-component paint according to Claim 7 or 8 or 9, wherein the cold mixture is heated in a heater upstream of the paint pump.
